(19) Europäisches Patentamt / European Patent Office / Office européen des brevets

(11) **EP 4 361 920 B1**

(12) **FASCICULE DE BREVET EUROPEEN**

(45) Date de publication et mention
de la délivrance du brevet:
**15.01.2025 Bulletin 2025/03**

(51) Classification Internationale des Brevets (IPC):
***G06Q 10/0631*** *(2023.01)*    ***G06Q 10/20*** *(2023.01)*
***G06Q 50/40*** *(2024.01)*

(21) Numéro de dépôt: **23205226.6**

(52) Classification Coopérative des Brevets (CPC):
**G06Q 10/20; G06Q 10/0631; G06Q 50/40**

(22) Date de dépôt: **23.10.2023**

(54) **PROCÉDÉ POUR ORDONNER LES VÉHICULES D'UNE FLOTTE DE VÉHICULES SELON UN BESOIN DE MAINTENANCE ; PROGRAMME D'ORDINATEUR ET SYSTÈME INFORMATIQUE ASSOCIÉS**

VERFAHREN ZUM ORDNEN VON FAHRZEUGEN EINER FAHRZEUGFLOTTE NACH EINEM WARTUNGSBEDARF, ENTSPRECHENDES COMPUTERPROGRAMM UND COMPUTERSYSTEM

METHOD FOR ORDERING VEHICLES OF A FLEET OF VEHICLES ACCORDING TO A MAINTENANCE REQUIREMENT; ASSOCIATED COMPUTER PROGRAM AND COMPUTER SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **24.10.2022 FR 2210996**

(43) Date de publication de la demande:
**01.05.2024 Bulletin 2024/18**

(73) Titulaire: **ALSTOM Holdings
93400 Saint-Ouen-sur-Seine (FR)**

(72) Inventeurs:
• **STAINO, Andrea
78600 MAISONS LAFFITTE (FR)**
• **MIJATOVIC, Nenad
75015 PARIS (FR)**
• **KAY, Fabien
95320 SAINT-LEU-LA-FORET (FR)**
• **ROBERTS, John
78600 MAISONS LAFFITTE (FR)**
• **CABOT, Julien
92210 SAINT CLOUD (FR)**

(74) Mandataire: **Lavoix
2, place d'Estienne d'Orves
75441 Paris Cedex 09 (FR)**

(56) Documents cités:
**US-A1- 2017 361 947    US-A1- 2019 197 798
US-B1- 10 692 304**

## Description

La présente invention a pour domaine celui de la maintenance d'une flotte de véhicules, notamment de véhicules ferroviaires, comme des trains, des métros, des tramways, etc.

On connaît des systèmes de surveillance des défaillances potentielles d'un véhicule ferroviaire fondés sur la génération d'événements au cours de l'exploitation de ce véhicule. Plus précisément, le véhicule surveillé est équipé d'une pluralité de capteurs propres à acquérir des données qui, une fois traitées, permettent de générer des évènements caractéristiques. Un événement constitue une nouvelle entrée dans une base de données de surveillance. Il est défini par une pluralité d'attributs, comme par exemple un identifiant du véhicule, un identifiant de l'évènement, un instant d'occurrence de l'évènement, le type dont relève l'évènement, et différentes valeurs le caractérisant (qui peuvent dépendre du type dont relève l'évènement).

Actuellement, les événements générés pour un véhicule sont analysés par des opérateurs de maintenance afin d'effectuer un diagnostic sur l'état du véhicule et déterminer s'il est nécessaire d'effectuer une opération de maintenance sur ce véhicule et la nature de cette opération de maintenance : simple inspection ou remplacement de tel ou tel composant défaillant (ou sur le point de défaillir) du véhicule ferroviaire considéré.

Cependant, de tels systèmes de surveillance génèrent des milliers d'événements chaque jour et pour chaque véhicule d'une flotte.

Une telle masse d'informations est difficilement analysable par un opérateur. Une telle analyse reste complexe, notamment pour établir des corrélations significatives entre évènements. Elle nécessite par conséquent un investissement important en termes de temps de travail et de coûts.

Par ailleurs, il est pratiquement impossible pour un opérateur de comparer les véhicules d'une flotte entre eux pour déterminer lequel de ces véhicules a un besoin de maintenance urgent afin d'effectuer en priorité les opérations de maintenance requises sur ce véhicule plutôt que sur un autre. Aujourd'hui, le choix d'inspecter un véhicule plutôt qu'un autre est essentiellement une décision empirique prise par l'opérateur de maintenance.

Il serait donc intéressant de pouvoir identifier rapidement et simplement le ou les véhicule(s) d'une flotte qui ont un besoin prioritaire de maintenance, ne serait-ce que pour optimiser les tâches de maintenance et limiter le temps pendant lequel un matériel ne peut être utilisé.

Le document US 2019/197798 A1 présente un procédé, mis en oeuvre par ordinateur, pour ordonner les véhicules d'une flotte de véhicules selon un besoin de maintenance, le procédé comportant les étapes de, pour chaque véhicule de la flotte : déterminer une série temporelle, la série temporelle comportant, pour chaque pas de temps, une valeur instantanée d'au moins une grandeur d'intérêt obtenue à partir d'évènements de surveillance acquis au moyen d'un système de surveillance des véhicules de la flotte de véhicules ; et analyser, sur un intervalle temporel prédéterminé, la série temporelle, en tenant compte des séries temporelles déterminées pour tous les véhicules de la flotte de véhicules, en considérant qu'à chaque pas de temps, l'état d'un véhicule est soit un état « normal » soit un état « anormal » nécessitant une maintenance, de manière à obtenir une séquence optimale d'états sur l'intervalle temporel prédéterminé.

Le but de la présente invention est notamment de répondre à ce besoin.

Pour cela l'invention a pour objet un procédé alternatif, un produit programme d'ordinateur et un système informatique selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

[Fig 1] La figure 1 est une représentation schématique d'un système informatique pour la mise en oeuvre du procédé selon l'invention ; et,
[Fig 2] La figure 2 est une représentation sous forme de blocs d'un mode de réalisation préféré du procédé d'ordonnancement selon l'invention.

Le procédé selon l'invention permet d'ordonner automatiquement les trains d'une flotte de trains selon un besoin de maintenance.

Une flotte de trains regroupe une pluralité de trains similaires voire identiques entre eux et qui sont mis en circulation sur un réseau de manière essentiellement interchangeable. Dit autrement, la question d'ordonner, les uns par rapport aux autres, les trains d'une flotte en fonction d'un besoin de maintenance a un sens, puisque ces différents trains sont comparables dans leur structure (et donc leur usure et leurs défaillances potentielles) et dans leur utilisation (et donc dans leurs conditions d'exploitation).

Le procédé selon l'invention est fondé sur la détection de salves ou rafales (« burst détection » en anglais) en analysant une série temporelle (« time séries ») d'une grandeur d'intérêt élaborée à partir des événements générés par un système de surveillance de l'état de la technique.

Dans le contexte de l'analyse de série temporelle d'une grandeur, la détection de salves est une technique permettant d'identifier les valeurs de cette grandeur qui présentent une forte augmentation sur une période de temps limitée par rapport à un niveau de base.

De nombreux algorithmes de détection de salves sont connues, notamment dans des applications de traitement du signal. De manière générale, un algorithme de détection de salves identifie les périodes de temps (ou salves) pendant lesquelles une valeur cible est inhabituellement fréquente.

Les algorithmes de détection de salves peuvent être adaptés pour des flux de données discrètes, comme c'est le cas pour les événements générés par un système de surveillance d'une flotte de trains. Dans ce qui suit, le mode de réalisation qui est présenté en détail met en oeuvre un algorithme de détection de salves fondé sur un maximum de vraisemblance logarithmique.

Selon l'invention, la détection de salves pour un train particulier est effectuée en déterminant le niveau de base à partir des événements générés par le système de surveillance pour l'ensemble des trains de la flotte.

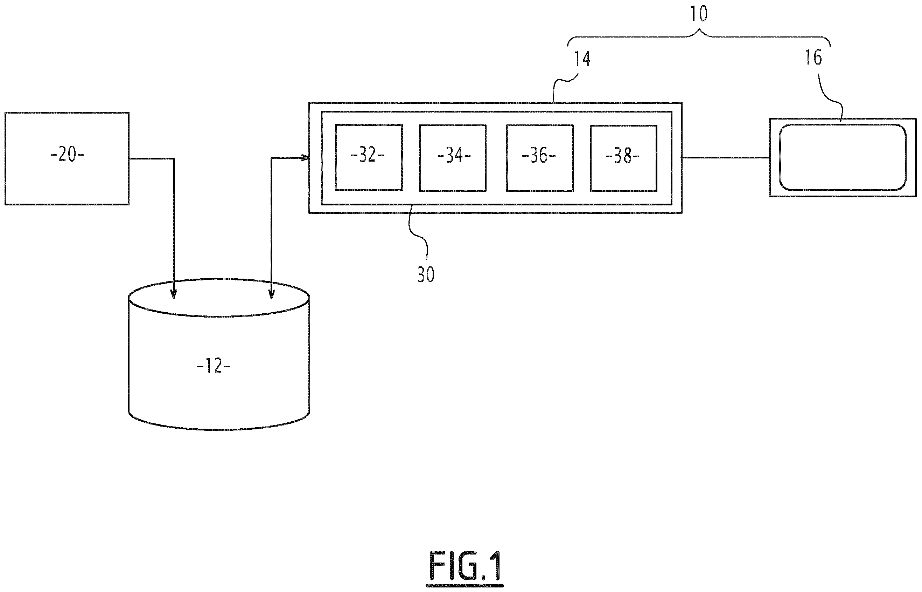

La figure 1 représente un système informatique 10 pour la mise en oeuvre du procédé selon l'invention.

Il comporte une base de données de surveillance 12 collectant les évènements générés par un système de surveillance 20 des trains de la flotte.

Le système informatique 10 comporte un ordinateur 14 comportant des moyens de calcul, tels qu'un processeur, et des moyens de mémorisation, telles qu'une mémoire. La mémoire stocke notamment les instructions de programmes d'ordinateurs, en particulier un programme 30 dont l'exécution permet la mise en oeuvre du procédé selon l'invention.

Le programme 30 peut être décomposé en modules, en particulier un module 32 de détermination d'une série temporelle d'une grandeur d'intérêt, un module 34 d'analyse de série temporelle, un module 36 de détection de salves, et un module 38 d'ordonnancement des trains de la flotte.

Le système informatique 10 comporte avantageusement une interface homme machine 16, par exemple une tablette, permettant d'afficher les résultats de la mise en oeuvre du procédé selon l'invention à l'intention d'un opérateur de maintenance.

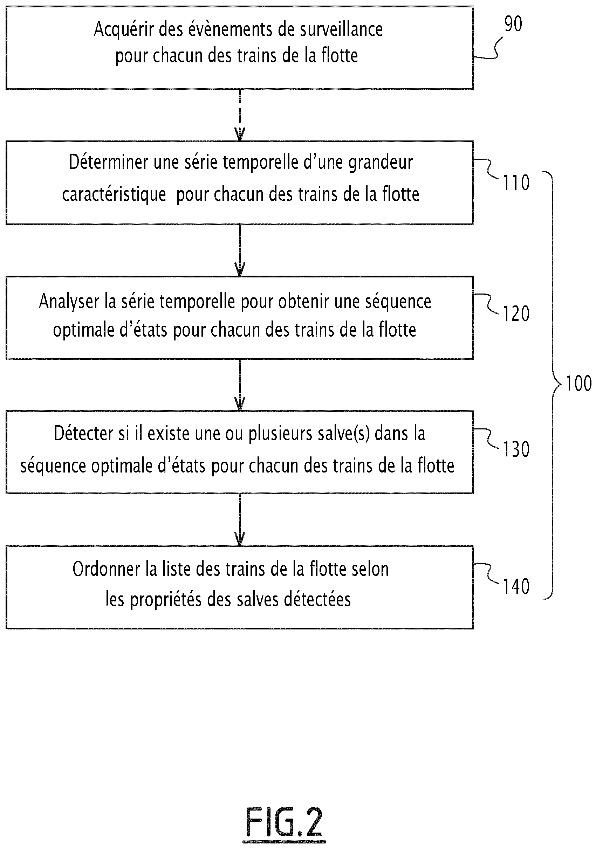

En se référant à la figure 2, est présenté un mode de réalisation préféré d'un procédé pour ordonner les trains d'une flotte de trains selon un besoin de maintenance.

Le procédé 100 est mis en oeuvre indépendamment d'une étape 90 préalable d'acquisition d'évènements.

Le procédé 100 en tant que tel comporte une étape 110 de détermination d'une série temporelle d'une grandeur d'intérêt ou caractéristique (cette étape correspondant à l'exécution du module 32), une étape 120 d'analyse d'une série temporelle (cette étape correspondant à l'exécution du module 34), une étape 130 de détection de salve (cette étape correspondant à l'exécution du module 36) et une étape 140 d'ordonnancement des trains de la flotte (cette étape correspondant à l'exécution du module 38).

Etape 90 d'acquisition

Cette étape, préalable à la mise en oeuvre du procédé selon l'invention, s'effectue conformément à l'art antérieur.

Elle est réalisée par le système de surveillance 20.

Elle consiste à acquérir, pour chaque train de la flotte, des données de surveillance et à créer des évènements à partir des données acquises.

Les données sont délivrées par des capteurs équipant chaque train.

Les évènements sont associés à un train particulier. Ils sont datés. Par exemple, le pas de temps choisi pour la datation des évènements est celui de la journée.

Les évènements sont enregistrés dans la base de données de surveillance 12.

Il est à noter qu'un nombre élevé d'occurrences d'un événement peut être dû à une défaillance réelle de l'équipement surveillé (le système de surveillance peut alors continuer à signaler cette défaillance jusqu'à ce qu'elle soit réparée). Mais, un nombre élevé d'occurrences peut aussi être dû à une erreur dans la conception du système de surveillance lui-même, notamment la modélisation de la défaillance que ce système utilise pour générer des évènements de surveillance (et alors le système de surveillance signale l'événement plusieurs fois au cours du temps).

Etape 110 de détermination d'une série temporelle d'une grandeur d'intérêt

L'étape 110 a pour finalité de construire, pour chaque train, une série temporelle d'une grandeur d'intérêt à partir des événements contenus dans la base de données de surveillance 12.

La grandeur d'intérêt est toute variable temporelle élaborée à partir de tout ou partie des évènements de surveillance associés à un train et permettant, en agrégeant ces

évènements de surveillance, de quantifier un besoin de maintenance à chaque pas de temps.

Par exemple, on définit d'abord une fenêtre temporelle correspondant par exemple à une semaine d'exploitation d'un train.

La grandeur d'intérêt est alors par exemple le nombre total d'événements de surveillance générés pour le train considéré à l'intérieur de la fenêtre temporelle. La grandeur d'intérêt ainsi calculée est datée par exemple avec le dernier jour de la fenêtre temporelle utilisée.

Il suffit de répéter cette opération en faisant glisser la fenêtre temporelle du pas de temps choisi (ici la journée), pour calculer une grandeur d'intérêt pour chaque jour d'exploitation d'un train.

La série temporelle pour un train est alors constituée de la séquence des valeurs de la grandeur d'intérêt pour ce train.

Une telle série temporelle est obtenue pour chacun des trains de la flotte.

En variante, au lieu du nombre cumulé d'événements, la grandeur d'intérêt pourrait correspondre au nombre cumulé d'événements relevant d'un type particulier (c'est-à-dire associés à une défaillance spécifique ou un composant spécifique du train). Dans une autre variante, au lieu de n'analyser qu'une série temporelle d'une grandeur d'intérêt, il pourrait être choisi de calculer différentes grandeurs d'intérêt et de suivre chacune de ces grandeurs dans le temps.

### Etape 120 d'analyse d'une série temporelle

Pour chaque train de la flotte, cette étape consiste à analyser la série temporelle de la grandeur d'intérêt obtenue à l'étape 110 en appliquant un algorithme de détection de salves, puis de quantifier le besoin de maintenance du train considéré en fonction des salves détectées.

Cette étape tient compte non seulement de la série temporelle associée au train considéré mais également des séries temporelles associées aux autres trains de la flotte.

L'algorithme de détection de salves plus particulièrement utilisé dans le présent mode de réalisation, est fondé sur le modèle qu'à chaque pas de temps un train ne peut être que dans deux états possibles, respectivement un état de fonctionnement nominal (« état normal » dans ce qui suit) et un état de fonctionnement nécessitant une maintenance (« état anormal » dans ce qui suit).

Plus précisément, en supposant que les événements suivent une distribution binomiale lorsque le train est dans l'état normal et une distribution binomiale (identique pour simplifier la présente description) lorsque le train est dans l'état anormal, l'algorithme de détection de salves vise à déterminer la séquence d'états qui correspond le mieux aux observations constituées par les valeurs de la série temporelle de la grandeur d'intérêt sur l'intervalle temporel considéré.

Considérons par exemple un intervalle temporel d'une semaine, subdivisé par pas de temps d'une journée. Chaque pas de temps de l'intervalle est indexé par l'entier t entre 1 et T, où est le nombre maximum de pas de temps de l'intervalle d'intérêt (ici T est égal à 7).

Considérons une flotte composée de N trains. Chaque train est indexé par un entier j entre 1 et N

La valeur quotidienne de la grandeur caractéristique pour le train j au jour t est notée : $g_j(t)$

La valeur quotidienne de la grandeur caractéristique totale pour tous les trains de la flotte au jour t est donnée par : $g_F(t) = \sum_{j=1}^{N} g_j(t)$

La valeur intégrée de la grandeur caractéristique pour le train j sur l'intervalle temporel est donnée par : $G_j = \sum_{t=1}^{T} g_j(t)$

La valeur intégrée de la grandeur caractéristique totale pour tous les trains de la flotte sur l'intervalle temporel est donnée par : $G_F = \sum_{t=1}^{T} g_F(t)$

On définit la probabilité du niveau de base pour le train j, ou probabilité de référence, par :

$$p_j^{ref} = G_j / G_F$$

Cette probabilité de référence est associée à l'état normal pour le train j. Elle correspond aux événements affectant le train j par rapport à l'ensemble des événements affectant les trains de la flotte, sur l'intervalle temporel considéré.

La probabilité de salve associée pour le train j est alors définie par : $p_j^{burst} = \alpha \cdot p_j^{ref}$ , où $\alpha$ est une constante de proportionnalité.

Cette probabilité de salve est associée à l'état anormal pour le train j.

Il s'agit ensuite de calculer une séquence d'états s(t) sur l'intervalle temporel considéré qui soit compatible avec les valeurs caractéristiques $g_j(t)$ et $g_F(t)$ pour le train j.

Pour ce faire, un critère statistique est choisi. Par exemple, dans le présent mode de réalisation, le critère statistique choisi est fondé sur une fonction de coût associant une fonction de vraisemblance logarithmique, avantageusement combinée avec une fonction de transition.

La fonction de vraisemblance instantanée associée à l'état s(t) à l'instant t (aussi noté *s*) pour le train j est la fonction de vraisemblance binomiale $\mathcal{L}_{s,j}(t)$ :

$$\mathcal{L}_{s,j}(t) = \binom{g_F(t)}{g_j(t)} \cdot p_j^{s\,g_j(t)} \cdot \left[\left(1 - p_j^s\right)\right]^{g_F(t) - g_j(t)}$$

Pour des raisons numériques, on cherche à minimiser le logarithme de $\mathcal{L}_{s,j}(t)$ sur l'intervalle temporel considéré. Afin d'évaluer la vraisemblance de l'état normal (s = « normal »), la probabilité $p_j^s$ est prise égale à $p_j^{ref}$. La vraisemblance de l'état anormal (s = « anormal ») est évaluée en prenant $p_j^s$ égale à $p_j^{burst}$.

La fonction de transition $H_{s,j}^{s'}(t)$ de l'état *s* à l'instant t vers l'état *s'* à l'instant suivant t+1 permet d'associer un coût à un changement d'état.

De préférence, puisque, par définition, l'état normal est l'état attendu du train et que l'état anormal est un état "exceptionnel", la fonction de transition n'est non nulle que s'il y a un changement d'état et que la transition se fait de l'état normal vers l'état anormal.

Il est envisageable que la fonction de transition soit proportionnelle à T, pour le rendre comparable au terme de vraisemblance dans le processus d'optimisation lorsque T augmente (c'est-à-dire lorsque l'intervalle de temps augmente).

Ainsi, le critère instantané à minimiser est le suivant :

$$f_j(t) = -\ln(\mathcal{L}_{s,j}(t)) + H_{s,j}^{s'}(t)$$

Sur l'intervalle de temps, le critère à minimiser devient :

$$F_j = \sum_{t=1}^{T} f_j(t)$$

La séquence optimale des états s(t) du train j, c'est-à-dire la séquence des états (« normal » ou « anormal ») du train j qui explique le mieux l'observation selon le modèle binomial, est donc celle qui minimise la fonction de coût pour tous les pas de temps de l'intervalle temporel considéré.

La séquence optimale est déterminée par exemple à l'aide d'une optimisation par un algorithme « glouton », connu de l'homme du métier.

Etape 130 de détection de salve(s)

La séquence optimale d'états est enfin analysée pour y isoler d'éventuelles salves. Une salve (« burst » en anglais) se caractérise alors par un nombre minimum de pas de temps consécutifs dans l'état anormal. Ce nombre seuil est prédéfini. Il peut être choisi égal à un, une salve étant alors détectée dès que le train se trouve dans l'état anormal.

En plus de sa durée, une salve peut être caractérisée par une intensité. L'intensité d'une salve est par exemple donnée par la somme des valeurs de la fonction de coût $f_j(t)$ sur le ou les pas de temps associé(s) à la salve.

Etape 140 d'ordonnancement

Une fois réalisées les étapes précédentes pour chaque train, le manière d'ordonner les trains de la flotte entre eux dépend de la grandeur d'intérêt.

Si l'on considère, comme dans l'exemple précédent, le nombre cumulé d'événements quotidien, on peut classer les trains par ordre décroissant de durée des salves détectées pour chaque train sur l'intervalle temporel considéré. Si deux salves ont la même durée, alors les trains sont classés par intensité décroissante de ces salves.

Si l'on considère au contraire le nombre d'événements quotidiens relevant d'un type particulier, alors les salves sont classées par intensité (sachant que l'intensité prend en compte d'une certaine manière la durée de la salve).

Une fois les trains de la flotte ordonnés par ordre de priorité, seuls les identifiants des X premiers trains (par exemple, X=3) sont affichés sur l'interface 16.

Avantageusement, en sélectionnant l'identifiant d'un train, l'opérateur accède aux Y événements (par exemple, Y=5) les plus récurrents affectant ce train

Avantages

Le présent procédé aide les opérateurs de maintenance à sélectionner le train prioritaire pour la maintenance de manière rapide et rationnelle.

Ce qui est pertinent pour le classement des trains les uns par rapport à autres, n'est pas le nombre d'occurrences d'événements en tant que tel, mais plutôt un changement significatif dans la proportion d'événements générés par un train par rapport au reste de la flotte, dans une certaine période de temps et éventuellement pour un certain type d'évènements.

Si une augmentation inhabituelle et abrupte se produit pour un train particulier (dans le nombre total d'événements, ou seulement pour un seul type d'événement), on peut alors considérer que, pour une raison quelconque, le comportement de ce train est altéré. Il est important de le signaler automatiquement car cela peut être symptomatique de quelque chose d'anormal qu'il convient de rectifier au plus vite.

**Revendications**

1. Procédé (100), mis en oeuvre par ordinateur, pour ordonner les véhicules d'une flotte de véhicules selon un besoin de maintenance, le procédé comportant les étapes de, pour chaque véhicule de la flotte :

   - déterminer (110) une série temporelle, la série temporelle comportant, pour chaque pas de temps, une valeur instantanée d'au moins une grandeur d'intérêt obtenue à partir d'évènements de surveillance acquis au moyen d'un système de surveillance des véhicules de la flotte de véhicules ; et,
   - analyser (120), sur un intervalle temporel prédéterminé, la série temporelle, en tenant compte des séries temporelles déterminées pour tous les véhicules de la flotte de véhicules, en considérant qu'à chaque pas de temps, l'état d'un véhicule est soit un état « normal » soit un état « anormal » nécessitant une maintenance, de manière à obtenir une séquence optimale d'états sur l'intervalle temporel prédéterminé,

   le procédé étant **caractérisé en ce qu'**il comporte les étapes supplémentaires de :

   - pour chaque véhicule de la flotte, détecter (130) la présence éventuelle d'une ou plusieurs salve(s) dans la séquence optimale d'états ; puis,
   - ordonner (140) une liste des véhicules de la flotte de véhicules selon les propriétés des salves détectées pour chacun des véhicules.

**2.** Procédé selon la revendication 1, dans lequel la grandeur d'intérêt est le nombre total d'évènements ou le nombre total d'évènements d'un type particulier affectant le véhicule considéré, acquis au cours d'une fenêtre temporelle de référence.

**3.** Procédé selon l'une quelconque des revendications précédentes, dans lequel analyser la série temporelle comporte une optimisation d'une fonction de coût, associant une fonction de vraisemblance et, de préférence, une fonction de transition, de manière à déterminer une probabilité instantanée pour chaque pas de temps.

**4.** Procédé selon la revendication 3, dans lequel la probabilité instantanée pour un pas de temps est comparée à une probabilité de référence calculée à partir des grandeurs d'intérêt de tous les véhicules de la flotte de véhicules, pour déterminer l'état optimal dans lequel se trouve le véhicule considéré au pas de temps considéré.

**5.** Procédé selon l'une quelconque des revendications précédentes, dans lequel détecter la présence de salves dans la séquence optimale d'états consiste à déterminer un nombre de pas de temps consécutifs que le véhicule passe dans l'état « anormal » dans la séquence optimale d'états et, lorsque que ce nombre de pas de temps est supérieur à un seuil prédéterminé, considérer qu'il s'agit d'une salve.

**6.** Procédé selon l'une quelconque des revendications précédentes, dans lequel une salve est **caractérisée par** une durée et/ou une intensité et ordonner la liste des véhicules de la flotte de véhicules selon les propriétés des salves détectées pour chaque véhicule s'effectue selon la durée et/ou l'intensité desdites salves.

**7.** Procédé selon l'une quelconque des revendications précédentes, dans lequel le véhicule est un véhicule ferroviaire, comme un train, un métro, ou un tramway.

**8.** Programme d'ordinateur comportant des instructions logicielles qui, lorsqu'elles sont exécutées par un ordinateur, mettent en oeuvre un procédé selon l'une quelconque des revendications précédentes.

**9.** Système informatique (10), **caractérisé en ce qu'**il est adapté pour mettre en oeuvre un procédé (100) selon l'une quelconque des revendications 1 à 6, le système informatique étant propre à accéder au contenu d'une base de données de surveillance (23) pour lire les évènements de surveillance acquis par un système de surveillance (20).

**10.** Système selon la revendication 9, comportant :

- un module (32) de détermination d'une série temporelle d'une grandeur d'intérêt ;
- un module (34) d'analyse de la série temporelle d'une grandeur d'intérêt pour déterminer une séquence optimale d'états ;
- un module (36) de détection de salves dans la séquence optimale d'états ; et,
- un module (38) d'ordonnancement des véhicules d'une flotte de véhicules selon les propriétés des salves détectées.

**Patentansprüche**

**1.** Verfahren (100), das von einem Rechner umgesetzt wird, zum Ordnen der Fahrzeuge einer Fahrzeugflotte gemäß einem Wartungsbedarf, wobei das Verfahren für jedes Fahrzeug der Flotte die folgenden Schritte aufweist:

- Bestimmen (110) einer Zeitreihe, wobei die Zeitreihe für jeden Zeitschritt einen Momentanwert mindestens einer interessierenden Größe umfasst, die aus Überwachungsereignissen erhalten wird, die mittels eines Überwachungssystems für die Fahrzeuge der Fahrzeugflotte erfasst werden; und
- Analysieren (120) der Zeitreihe über ein vorbestimmtes Zeitintervall, unter Berücksichtigung der Zeitreihen, die für alle Fahrzeuge der Fahrzeugflotte bestimmt wurden, unter der Annahme, dass bei jedem Zeitschritt der Zustand eines Fahrzeugs entweder ein "normaler" Zustand oder ein "anormaler" Zustand ist, der eine Wartung erfordert, um eine optimale Abfolge von Zuständen über das vorbestimmte Zeitintervall zu erhalten,

wobei das Verfahren **dadurch gekennzeichnet ist, dass** es die folgenden zusätzlichen Schritte aufweist:

- Erfassen (130), für jedes Fahrzeug der Flotte, ob ein oder mehrere Burst(s) in der optimalen Abfolge von Zuständen vorhanden ist/sind; dann
- Ordnen (140) einer Liste von Fahrzeugen der Fahrzeugflotte gemäß den Eigenschaften der erfassten Bursts für jedes der Fahrzeuge.

**2.** Verfahren nach Anspruch 1, wobei die interessierende Größe die Gesamtzahl der Ereignisse oder die Gesamtzahl der Ereignisse eines bestimmten Typs ist, die das betrachtete Fahrzeug betreffen, die während eines Referenzzeitfensters erfasst wurden.

**3.** Verfahren nach einem der vorhergehenden Ansprüche, wobei das Analysieren der Zeitreihe eine Optimierung einer Kostenfunktion aufweist, die eine Wahrscheinlichkeitsfunktion und vorzugsweise eine Übergangsfunktion kombiniert, um eine momentane Wahrscheinlichkeit für jeden Zeitschritt zu bestimmen.

**4.** Verfahren nach Anspruch 3, wobei die momentane Wahrscheinlichkeit für einen Zeitschritt mit einer ausgehend von den interessierenden Größen aller Fahrzeuge der Fahrzeugflotte berechneten Referenzwahrscheinlichkeit verglichen wird, um den optimalen Zustand zu bestimmen, in dem sich das betreffende Fahrzeug zu dem betreffenden Zeitschritt befindet.

**5.** Verfahren nach einem der vorhergehenden Ansprüche, wobei das Erkennen des Vorhandenseins von Bursts in der optimalen Abfolge von Zuständen darin besteht, eine Anzahl aufeinanderfolgender Zeitschritte zu bestimmen, die das Fahrzeug im "anormalen" Zustand in der optimalen Abfolge von Zuständen den verbringt, und, wenn diese Anzahl von Zeitschritten größer als ein vorbestimmter Schwellenwert ist, Feststellen, dass es sich um einen Burst handelt.

**6.** Verfahren nach einem der vorhergehenden Ansprüche, wobei ein Burst durch eine Dauer und/oder eine Intensität gekennzeichnet ist und das Ordnen der Liste der Fahrzeuge der Fahrzeugflotte gemäß den Eigenschaften der für jedes Fahrzeug erfassten Bursts nach der Dauer und/oder der Intensität der Bursts erfolgt.

**7.** Verfahren nach einem der vorhergehenden Ansprüche, wobei das Fahrzeug ein Schienenfahrzeug wie ein Zug, eine U-Bahn oder eine Straßenbahn ist.

**8.** Rechnerprogramm, umfassend Softwareanweisungen, die, wenn sie von einem Rechner ausgeführt werden, ein Verfahren nach einem der vorhergehenden Ansprüche durchführen.

**9.** IT-System (10), **dadurch gekennzeichnet, dass** es geeignet ist, ein Verfahren (100) nach einem der Ansprüche 1 bis 6 auszuführen, wobei das IT-System imstande ist, auf den Inhalt einer Überwachungsdatenbank (23) zuzugreifen, um die von einem Überwachungssystem (20) erfassten Überwachungsereignisse zu lesen.

**10.** System nach Anspruch 9, aufweisend:

- ein Modul (32) zur Bestimmung einer Zeitreihe einer interessierenden Größe;
- ein Modul (34) zur Analyse der Zeitreihe einer interessierenden Größe, um eine optimale Abfolge von Zuständen zu bestimmen;
- ein Modul (36) zur Erkennung von Bursts in der optimalen Abfolge von Zuständen; und
- ein Modul (38) zum Ordnen der Fahrzeuge einer Fahrzeugflotte gemäß den Eigenschaften der erfassten Bursts.

**Claims**

**1.** A computer-implemented method (100) for ordering the vehicles of a fleet of vehicles according to a need for maintenance, the method including the steps of, for each vehicle in the fleet,

- determining (110) a time series, the time series including, for each time step, an instantaneous value of at least one quantity of interest obtained from monitoring events acquired by means of a system for monitoring vehicles of the fleet of vehicles; and,
- analyzing (120), over a predetermined time interval, the time series, taking into account the time series determined for all the vehicles of the fleet of vehicles, considering that at each time step, the state of a vehicle is either a "normal" state or an "abnormal" state requiring maintenance, so as to obtain an optimal sequence of states over the predetermined time interval,

the method being **characterized in that** it comprises the additional steps of:

- for each vehicle in the fleet, detecting (130) presence, if any, of one or a plurality of bursts in the optimum sequence of states; then,
- ordering (140) a list of vehicles of the fleet of vehicles according to the properties of the bursts detected for each vehicle.

**2.** The method according to claim 1, wherein the quantity of interest is the total number of events or the total number of events of a particular type affecting the vehicle considered, acquired during a reference time window.

**3.** The method according to any of the preceding claims, wherein analyzing the time series includes an optimization of a cost function, associating a likelihood function and preferentially a transition function, so as to determine an instantaneous probability for each time step.

**4.** The method according to claim 3, wherein the instantaneous probability for a time step is compared with a reference probability calculated from the quantities of interest of all vehicles of the fleet of vehicles, so as to determine the optimum state of the vehicle considered at the time step considered.

5. The method according to any of the preceding claims, wherein detecting the presence of bursts in the optimum sequence of states consists of determining a number of consecutive time steps the vehicle spends in the "abnormal" state in the optimum sequence of states, and, when the number of time steps is greater than a predetermined threshold, considering same as a burst.

6. The method according to any of the preceding claims, wherein a burst is **characterized by** a duration and/or an intensity and ordering the list of vehicles of the fleet of vehicles according to the properties of the bursts detected for each vehicle is carried out depending on the duration and/or the intensity of said bursts.

7. The method according to any of the preceding claims, wherein the vehicle is a railway vehicle, such as a train, a subway, or a tram.

8. A computer program including software instructions which, when executed by a computer, implement a method according to any of the preceding claims.

9. A computer system (10), **characterized in that** same is suitable for implementing a method (100) according to any of claims 1 to 6, the computer system being suitable for accessing the content of a monitoring database (23), for reading monitoring events acquired by a monitoring system (20).

10. The system according to claim 9, including:

   - a module (32) for determining a time series of a quantity of interest;
   - a module (34) for analyzing the time series of a quantity of interest, for determining an optimum sequence of states;
   - a module (36) for detecting bursts in the optimum sequence of states; and,
   - a module (38) for scheduling the vehicles of a fleet of vehicles according to the properties of the bursts detected.

FIG.1

EP 4 361 920 B1

Acquérir des évènements de surveillance
pour chacun des trains de la flotte  90

Déterminer une série temporelle d'une grandeur
caractéristique  pour chacun des trains de la flotte  110

Analyser la série temporelle pour obtenir une séquence
optimale d'états pour chacun des trains de la flotte  120

Détecter si il existe une ou plusieurs salve(s) dans la
séquence optimale d'états pour chacun des trains de la flotte  130

Ordonner la liste des trains de la flotte selon
les propriétés des salves détectées  140

100

## FIG.2

## EP 4 361 920 B1

**Documents brevets cités dans la description**

- US 2019197798 A1